# EUROPÄISCHE PATENTANMELDUNG

(11) **EP 1 857 970 A1**
(43) Veröffentlichungstag der Anmeldung: **21.11.2007**
(21) Anmeldenummer: 06010207.6
(22) Anmeldetag: 17.05.2006
(51) Int. Cl.: G06Q 10/00

(54) **Verfahren und System zur Ermittlung einer optimalen Anlagenkonfiguration**

(71) Anmelder: SIEMENS AKTIENGESELLSCHAFT, 80333 München (DE)
(72) Erfinder: Tetzner, Thilo, 90491 Nürnberg (DE)

(57) **Zusammenfassung**

Zur einfachen und schnellen Ermittlung einer optimalen Anlagenkonfiguration für eine bestehende Anlage wird vorgeschlagen, in einem Datenspeicher (5) Daten bezüglich Leistungskenngrößen (KPI), technischer Einflussgrößen (E), einer Anzahl theoretisch in einer Anlage des Anlagentyps verbaubarer technischer Anlagenmodule (A1, A2) und einer Anzahl möglicher technischer Optimierungslösungen (O1, O2) zu speichern. Anhand von Daten bezüglich der tatsächlich in einer bestehenden Anlage verbauten Anlagenmodule (A1...n) wird die Konfiguration einer bestehenden Anlage ermittelt und es werden diejenigen der Einflussgrößen (E) aus dem Datenspeicher (5) entnommen, die den ermittelten Anlagenmodulen (A1, A2) zugeordnet sind. Danach wird eine Anzahl möglicher modifizierter Anlagenkonfigurationen ermittelt, indem jeweils eines oder mehrere der ermittelten Anlagenmodule (A1, A2) durch jeweils eine oder mehrere der diesen zugeordneten Optimierungslösungen (O1, O2) ersetzt wird. Für jede der möglichen modifizierten Anlagenkonfigurationen werden die Änderungen der Werte der ermittelten Einflussgrößen (E) und die damit verbundene Änderungen der Werte der Leistungskenngrößen (KPI) im Vergleich zur bestehenden Anlagenkonfiguration berechnet und daraus eine optimale Anlagenkonfiguration abgeleitet.

## Beschreibung

Die Erfindung betrifft ein Verfahren und ein System zur Ermittlung einer optimalen Anlagenkonfiguration gemäß Patentanspruch 1 bzw. Patentanspruch 8.

Technische Anlagen werden für einen bestimmten Zweck gebaut. Dabei werden die im Zeitpunkt der Planung und Errichtung geltenden Bedingungen der für die Anlage relevanten Absatz-, Technologie-, Verfahrens- und Faktorenmärkte, sowie die damit in Zusammenhang stehenden Risiken berücksichtigt, und auch in die Zukunft projiziert.

Insbesondere bei langlebigen industriellen Produktionsanlagen oder Infrastrukturanlagen ändern sich im Laufe des Lebens einer derartigen Anlage nicht nur diese Bedingungen, sondern auch die Einbindung der Anlage in einen Unternehmenskontext. So können sich zu produzierende Produkte aufgrund der Kunden-oder Marktbedürfnisse oder der technischen Entwicklung weiter entwickeln, und ebenso die zu deren Herstellung eingesetzte Technik. So kann die bestehende Technik hohe Betriebs-, Wartungs- und Instandhaltungskosten verursachen und sich durch eine geringere Effizienz als die einer Anlage auf Basis neuer und innovativer Techniken und Technologien auszeichnen. Dies kann sich durch einen Nachteil gegenüber Wettbewerbern oder auch durch ungenutzte Geschäftsmöglichkeiten artikulieren.

Es ist somit für einen Anlagenbetreiber notwendig, seine Anlage hinsichtlich sich ändernder Rahmenbedingungen zu optimieren, wobei unter einer Optimierung insbesondere eine Modernisierung der Anlage verstanden wird. Hinsichtlich einer Modernisierung kann der Anlagenbetreiber entweder in längeren Zeitabständen eine Großmodernisierung der Anlage durchführen, bei der die Anlage im Wesentlichen vollständig modernisiert wird. Die Großmodernisierung hat allerdings den Nachteil, dass immer ein erheblicher Produktionsausfall damit verbunden ist, und dass ein finanziell und technisch aufwändiger Abwicklungsprozess mit nicht unerheblichen Zusatzrisiken angestoßen werden muss. Alternativ kann der Anlagenbetreiber über den Lebenszyklus einer Anlage eine kontinuierliche Modernisierung der Anlage durchführen, wie sie z.B. aus der WO 2005/052840 A1 bekannt ist. Hierdurch kann eine Modernisierung besonders zielgerichtet und effizient hinsichtlich einer Steigerung der Werthaltigkeit der Anlage durchgeführt werden.

Oftmals ist es jedoch schwierig, diejenige technische Lösung zu finden, mit der neue Anforderungen unter Berücksichtigung technischer und betriebswirtschaftlicher Aspekte möglichst optimal erfüllt werden können. Gerade bei der Modernisierung komplexer und in der Regel auch kostenintensiver Anlagen ist es wünschenswert und sinnvoll, vor der eigentlichen Realisierung verschiedene mögliche Alternativen miteinander zu vergleichen, um eine optimale Lösung zu finden.

Oftmals wird im Vorfeld der Modernisierung einer Anlage intuitiv, das heißt subjektiven Erwägungen und Einschätzungen folgend, nach geeigneten Lösungen gesucht und diese miteinander verglichen. Demgemäß sind die subjektiv gefundenen Lösungen und die getroffenen Entscheidungen sowie der Weg der Entscheidungsfindung in aller Regel nur bedingt bzw. lückenhaft nachvollzieh- und reproduzierbar. Im Ergebnis stellt sich dann nach Durchführung der Optimierung der gewünschte Erfolg gar nicht oder nur teilweise ein, denn eine Verbesserung der Anlagenleistung an der einen Stelle hatte eine vorher nicht bedachte Verschlechterung an einer anderen Stelle zur Folge.

Es ist deshalb Aufgabe vorliegender Erfindung, ein Verfahren und ein System anzugeben, die es ermöglichen, für eine bereits bestehende Anlage schnell und einfach eine optimale Anlagenkonfiguration und zugehörige Optimierungslösungen zu ermitteln.

Die Lösung der auf das Verfahren gerichteten Aufgabe gelingt durch ein Verfahren gemäß Patentanspruch 1. Die Lösung der auf das System gerichteten Aufgabe gelingt erfindungsgemäß durch ein System gemäß Patentanspruch 8. Ein Computerprogramm-Produkt ist Gegenstand des Patentanspruchs 10. Ein computerlesbares Medium, auf dem das Computerprogramm-Produkt gespeichert ist, ist Gegenstand des Patentanspruchs 11. Vorteilhafte Ausgestaltungen sind jeweils Gegenstand der Unteransprüche.

Die Erfindung geht dabei in einem ersten Schritt von der Überlegung aus, den Zustand und die Leistungsfähigkeit einer Anlage anhand von Leistungskenngrößen zu beurteilen. Bevorzugt handelt es sich bei den Leistungskenngrößen um für den Anlagentyp bekannte branchenübliche Leistungskenngrößen, die oftmals auch als "Key Performance Indicators" bezeichnet werden. Ein Beispiel für einen derartigen Leistungskennwert ist die Overall Equipment Effectiveness (OEE), die die tatsächliche Auslastung einer Industrieanlage gegenüber ihrer theoretisch möglichen Auslastung beschreibt. Derartige Leistungskenngrößen können somit objektive Bewertungskriterien für einen Vergleich verschiedener Optimierungslösungen darstellen.

In einem zweiten Schritt geht die Erfindung von der Überlegung aus, dass es für jeden Anlagentyp eine technologische Anlagenstruktur gibt, deren Gesamtfunktionalität als eine Aggregation einer Anzahl kleinster funktionaler Anlageneinheiten, im Folgenden als "technische Anlagenmodule" bezeichnet, angesehen werden kann. Diese Module können beispielsweise Maschinen- und Anlagenteile der Produktions- und Hilfsprozesse, Software- und Hardwarekomponenten, Antriebstechnik oder unterstützende Systeme (Energieversorgung, MES) sein. In einer bestehenden Anlage kann somit jede Teilfunktionalität oder eine Kombination mehrerer Teilfunktionalitäten in Form eines oder mehrerer technischer Anlagenmodule realisiert sein. Insgesamt ist mit Hilfe der Anlagenmodule somit die gesamte Struktur einer Anlage abbildbar. Die individuell in einer konkreten Anlage tatsächlich vorliegende Kombination derartiger Anlagenmodule bestimmt die individuelle Konfiguration einer bestimmten Anlage.

Auf der anderen Seite können potenziell zumindest ein Teil der Anlagenmodule oder Aggregationen von Anlagenmodulen Gegenstand einer Optimierung sein. Diese Anlagenmodule bzw. Aggregationen von Anlagenmodulen können im Rahmen einer Optimierung dann durch eine oder mehrere neue technische Lösungen, im Folgenden als "Optimierungslösungen" bezeichnet, ersetzt werden und somit zu einer möglichen modifizierten Anlagenkonfiguration führen.

Der Zusammenhang zwischen den Leistungskenngrößen, der Anlagenstruktur bzw. den Anlagenmodulen und den Optimierungslösungen wird hierbei über technische Einflussgrößen hergestellt. Technische Einflussgrößen steuern bzw. treiben eine Leistungskenngröße und sind zumindest einem Anlagenmodul zugeordnet. Beispiele für technische Einflussgrößen auf den KPI "Overall Equipment Effectiveness (OEE)" sind "Wartung der neuralgischen Verschleißteile elektrischer Antriebe" oder "Einsatz von intelligenten Produktionsplanungssystemen".

Jedes der Anlagenmodule und jede der Optimierungslösungen weist wiederum eine Zuordnung zu zumindest einer der technischen Einflussgrößen auf. Die Optimierungslösungen weisen darüber hinaus für jede zugeordnete Einflussgröße jeweils einen Wert für die Änderung dieser Einflussgröße sowie eine Zuordnung zu zumindest einem Anlagenmodul auf. Durch die Zuordnungen können Wechselwirkungen zwischen verschiedenen Anlagenmodulen und Optimierungslösungen bezüglich der Einflussgrößen und somit auch der Leistungskenngrößen berücksichtigt werden.

Durch eine Ermittlung derjenigen der vordefinierten Anlagenmodule, die tatsächlich in einer bestehenden, zu optimierenden Anlage verbaut sind, kann die Konfiguration der bestehenden Anlage und über deren Zuordnung zu Einflussgrößen auch die tatsächlich für die bestehende Anlage relevanten Einflussgrößen ermittelt werden.

Anschließend kann nun eine Anzahl möglicher modifizierter Anlagenkonfigurationen ermittelt werden, indem jeweils eines oder mehrere der ermittelten Anlagenmodule durch jeweils eine oder eine Kombination zugeordneter Optimierungslösungen ersetzt wird. Für jede der modifizierten Anlagenkonfigurationen werden dann die Änderungen der Werte der ermittelten Einflussgrößen und die damit verbundene Änderungen der Werte der Leistungskenngrößen im Vergleich zur bestehenden Anlagenkonfiguration berechnet.

Hierbei liegt die Überlegung zugrunde, dass für den Vergleich verschiedener Optimierungslösungen nicht der Absolutwert der Einflussgrößen (und der daraus bestimmbaren Leistungskenngrößen) entscheidend ist, sondern dass es ausreichend ist, deren Werteänderungen zu vergleichen. Durch den Verzicht auf Absolutwerte ist besonders schnell und einfach ein Vergleich verschiedener Anlagenkonfigurationen und damit Optimierungslösungen möglich. Die Wertänderungen sind somit ein geeignete Grundlage für einen Vergleich verschiedener möglicher Anlagenkonfigurationen und damit Optimierungslösungen.

Zweckmäßigerweise wird abschließend genau diejenige der möglichen modifizierten Anlagenkonfigurationen ermittelt und ausgegeben, für die über die Änderung des Wertes der identifizierten technischen Einflussgrößen und der damit verbundenen Änderungen der Werte der Leistungskenngrößen der Zustand und die Leistungsfähigkeit der Anlage maximal verbesserbar ist.

Es ist somit eine auf die gesamte Anlage fokussierende, systematische und reproduzierbare Auffindung der für die Optimierung des Zustandes und der Leistungsfähigkeit geeignetsten Anlagenkonfiguration und damit meist geeigneten Optimierungslösung und/oder eine systematische Auswahl zwischen mehreren alternativen Anlagenkonfigurationen bzw. Optimierungslösungsvorschlägen in Abhängigkeit objektiver Bewertungskriterien möglich.

Unterschiedliche Optimierungskonzepte können somit mit geringem Aufwand gegenübergestellt und bewertet werden. Wesentlich hierbei ist, dass über die Einflussgrößen Wirkungszusammenhänge zwischen den verschiedenen Anlagenmodulen und Optimierungslösungen berücksichtigt werden und auch sichtbar gemacht werden können.

Zusätzlich können bei der Ermittlung der optimalen Anlagenkonfiguration noch betriebswirtschaftliche Einflussgrößen, die ebenfalls den Wert der Leistungskenngrößen mitbestimmen, berücksichtigt werden. Betriebswirtschaftliche Einflussgrößen sind beispielsweise Einflussgrößen aus den Bereichen Prozessmanagement, Qualitätssicherung, Weiterbildung und Schulung, die zwar nicht an technische Anlagenmodule geknüpft sind, aber trotzdem auf Leistungskenngrößen wirken, weil sie z.B. Einfluss auf die Lagerhaltung, das Management, den Einkauf oder Vertrieb haben. Die betriebswirtschaftlichen Einflussgrößen können zusätzlich abgefragt und somit deren Einfluss auf die Leistungskenngrößen bei dem Vergleich verschiedener alternativer Anlagenkonfigurationen berücksichtigt werden.

Aus den Änderungen der Werte der identifizierten technischen Einflussgrößen und der damit verbundenen Änderungen der Werte der Leistungskenngrößen kann eine Änderung der Werthaltigkeit der Anlage ermittelt wird. Dies kann zum Beispiel mit Hilfe eines Verfahrens erfolgen, das in der noch unveröffentlichten deutschen Patentanmeldung mit dem Aktenzeichen 10 2005 055 431.8 beschrieben ist.

Wenn jeder der Optimierungslösungen zusätzlich noch ein Kostenaufwand zugeordnet ist, kann für die ermittelten modifizierten Anlagenkonfigurationen durch Vergleich der Änderung der Werthaltigkeit der Anlage und des Kostenaufwandes eine Rentabilität der Optimierung ermittelt werden.

Da eine Leistungskenngröße üblicherweise durch eine Vielzahl verschiedener technischer Sachverhalte beeinflusst wird, die schon wegen ihrer großen Anzahl und Bedeutung wegen nicht unbedingt als Leistungskenngrößen bezeichnet werden können, auch wenn sie im Einzelfall natürlich maßgeblich auf die Leistung der Anlage haben, können für jede Leistungskenngröße noch eine Anzahl unterlagerter Leistungsgrößen (Performance Indicators) definiert und in dem Datenspeicher abgespeichert werden, wobei eine Leistungsgröße immer nur genau einer einzigen Leistungskenngröße zugeordnet ist. Anhand der Änderungen der Werte der Einflussgrößen oder Gruppen von Einflussgrößen können dann Änderungen der Leistungsgrößen und aus den Änderungen der Leistungsgrößen wiederum Änderungen der Leistungskenngrößen ermittelt werden. Falls gewünscht können zur besseren Strukturierung zwischen die Leistungskenngrößen und die Leistungsgrößen noch weitere Strukturelemente geschaltet sein, über die mehrere Leistungsgrößen einer Leistungskenngröße zugeordnet werden. Insgesamt kann somit ein Kennzahlensystem definiert werden.

Zur Verringerung der Komplexität können jeweils eine Anzahl von Einflussgrößen zu einer Gruppe und ggf. auch Gruppen wiederum zu übergeordneten Gruppen zusammengefasst und somit ein "Treiberbaum" für das Kennzahlensystem definiert werden.

Ein erfindungsgemäßes System umfasst
a) einen Datenspeicher, in dem gespeichert sind
   - Daten bezüglich Leistungskenngrößen, die den Zustand und die Leistungsfähigkeit einer Vielzahl von Anlagen eines Anlagentyps bestimmen,
   - Daten bezüglich technischer Einflussgrößen, die den Wert der Leistungskenngrößen bestimmen,
   - Daten bezüglich einer Anzahl theoretisch in einer Anlage des Anlagentyps verbaubarer technischer Anlagenmodule,
   wobei mit Hilfe der Anlagenmodule die gesamte technologische Struktur einer Anlage des Anlagentyps abbildbar ist, und wobei jedes der Anlagenmodulen zumindest einer der technischen Einflussgrößen zugeordnet ist,
   - Daten bezüglich einer Anzahl möglicher technischer Optimierungslösungen, wobei jede der Optimierungslösungen eine Zuordnung zu zumindest einer der Anlagenmodulen, zu zumindest einer der Einflussgrößen sowie zu einem Wert für die Änderung dieser Einflussgröße aufweist,
b) eine Eingabeeinheit zur Eingabe von Daten bezüglich der in der Anlage verbauten Anlagenmodulen
c) eine Ausgabeeinheit,
d) eine Berechungs- und Steuereinheit, die
   - die Daten bezüglich der Anzahl theoretisch in einer Anlage des Anlagentyps verbaubarer technischer Anlagenmodule auf der Ausgabeeinheit zur Ausgabe bringt,
   - Daten bezüglich der in der Anlage verbauten Anlagenmodule von der Eingabeeinheit empfängt,
   - dem Datenspeicher diejenigen Einflussgrößen entnimmt, die den in der Anlage verbauten Anlagenmodulen zugeordnet sind,
   - eine Anzahl möglicher modifizierter Anlagenkonfigurationen ermittelt, indem sie eines oder mehrere der ermittelten Anlagenmodule durch jeweils eine oder mehrere der diesen zugeordneten Optimierungslösungen ersetzt,
   - für jede der möglichen modifizierten Anlagenkonfigurationen die Änderungen der Werte der ermittelten Einflussgrößen und die damit verbundenen Änderungen der Werte der Leistungskenngrößen im Vergleich zur bestehenden Anlagenkonfiguration berechnet.

Die für das erfindungsgemäße Verfahren genannten Überlegungen und Vorteile gelten entsprechend für das erfindungsgemäße System.

Weiterhin führt die Erfindung zu einem Computerprogramm-Produkt, welches auf einem computerlesbaren Medium speicherbar ist und einen Software-Code-Abschnitt aufweist, welcher geeignet ist, ein Computersystem zur Durchführung des Verfahrens gemäß einem der Ansprüche 1 bis 7 zu veranlassen, wenn das Produkt auf dem Computersystem ausgeführt wird.

Die Erfindung führt weiter auf ein computerlesbares Medium, auf dem das Computerprogramm-Produkt gespeichert ist.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigt:
- FIG 1: eine Struktur eines erfindungsgemäßen Systems in schematischer Darstellung,
- FIG 2: ein Flussdiagramm eines erfindungsgemäßen Verfahrensab-laufes,
- FIG 3: eine Veranschaulichung der Ermittlung eines Kennzahlen-systems für einen Anlagentyp,
- FIG 4: eine Veranschaulichung der Ermittlung der Änderungen der Werte von Einflussgrößen und der damit verbundenen Änderungen der Werte von Leistungskenngrößen.

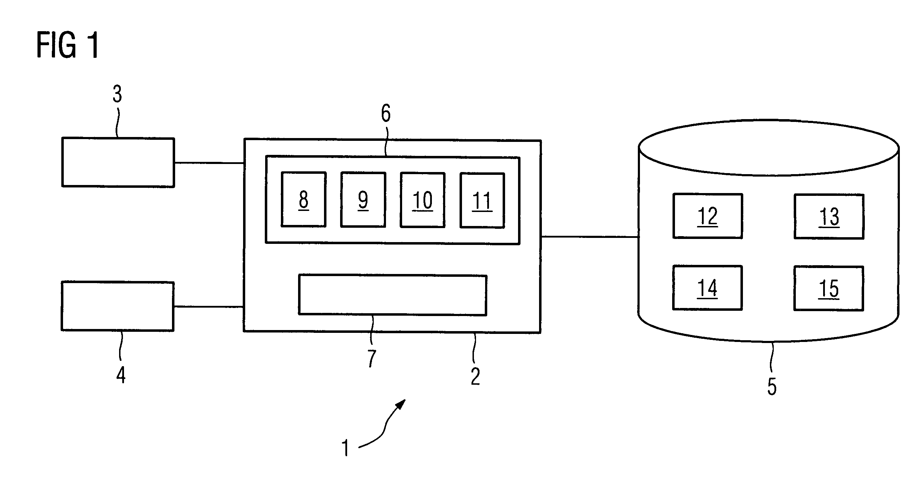

FIG 1 zeigt in schematischer Darstellung die Struktur eines erfindungsgemäßen Konfigurationssystems 1 zur Ermittlung einer optimalen Anlagenkonfiguration. Das Konfigurationssystem 1 umfasst eine Berechnungs- und Steuerungseinheit 2, eine Eingabeeinheit 3, eine Ausgabeeinheit 4 und einen Datenspeicher 5. Die Eingabeeinheit 3 kann als Tastatur, Maus oder ähnliches ausgebildet sein. Die Ausgabeeinheit 3 kann als Display, Monitor oder Drucker ausgebildet sein und dient zur Ausgabe von Informationen zur Unterstützung der Dateneingabe über die Eingabeeinheit 2 und gibt Daten über Änderungen von Leistungskenngrößen und Einflussgrößen aus, die durch die Berechnungs- und Steuerungseinheit 2 ermittelt werden. Die Berechnungs- und Steuerungseinheit 2 steuert den Betrieb des gesamten Systems und berechnet ausgehend von einer vorhandenen Anlagenkonfiguration für verschiedene mögliche modifizierte Anlagenkonfigurationen bzw. Optimierungslösungen Änderungen von Leistungskenngrößen und Einflussgrößen der Anlage.

Die Berechnungs- und Steuerungseinheit 2 umfasst im Wesentlichen einen Speicher 6 und einen Prozessor 7, der Programme ausführt, die im Speicher 6 gespeichert sind.

Der Speicher 6 speichert zumindest ein Steuerungs-Programm-modul 8, dass das gesamte Konfigurationsverfahren steuert, ein Anlagenermittlungs-Programmmodul 9 zur Ermittlung tatsächlich in einer Anlage verbauter Anlagenmodule, ein Berechnungs-Programmmodul 10 zur Berechnung von Änderungen der Werte der Einflussgrößen und Leistungskenngrößen wenn die ermittelten Anlagenmodulen durch Optimierungslösungen ersetzt werden sowie zur Bestimmung einer optimalen Anlagenkonfiguration anhand der Berechnungen und ein Programm-Modul 11 zur Investitionsrechnung.

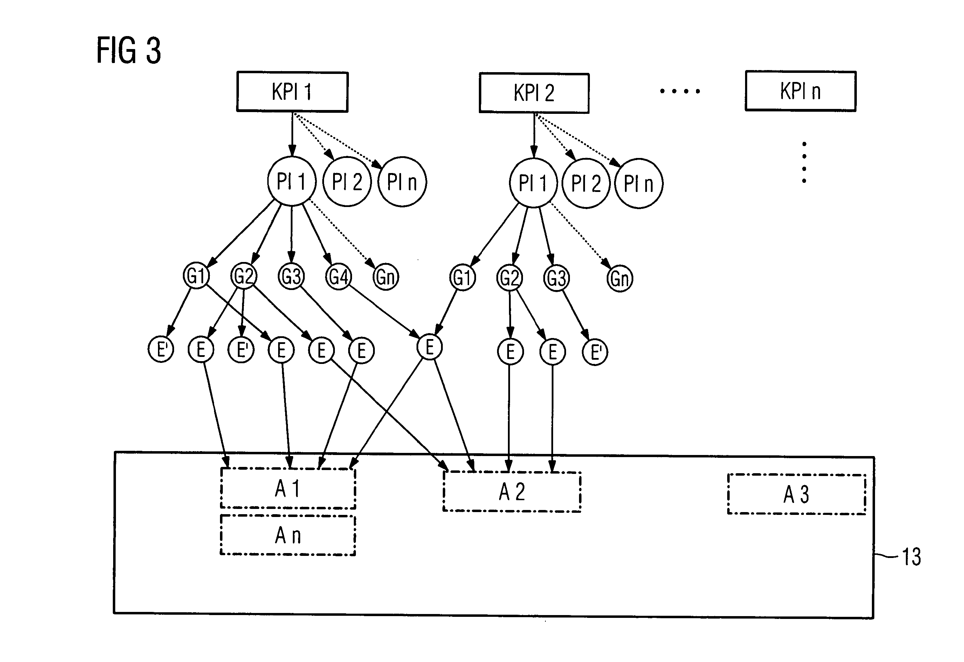

In dem Datenspeicher 5 sind - wie im Detail im Zusammenhang mit FIG 3 erläutert - ein Kennzahlensystem 12 und ein Treiberbaum 13 für einen Anlagentyp gespeichert. Das Kennzahlensystem 12 umfasst Leistungskenngrößen, die den Zustand und die Leistungsfähigkeit einer Vielzahl von Anlagen des Anlagentyps bestimmen. Der Treiberbaum 13 umfasst technische und betriebswirtschaftliche Einflussgrößen, die den Wert der Leistungskenngrößen bestimmen.

Weiterhin sind in dem Datenspeicher 5 Daten 14 bezüglich einer Anzahl theoretisch in einer Anlage des Anlagentyps verbaubarer technischer Anlagenmodule gespeichert, wobei jedes der Anlagenmodule zumindest einer der technischen Einflussgrößen aus dem Treiberbaum 13 sowie ein Wert für dessen Einfluss auf diese Einflussgröße zugeordnet ist.

Außerdem sind in dem Datenspeicher 5 Daten 15 bezüglich einer Anzahl technischer Optimierungslösungen gespeichert, wobei jede der Optimierungslösungen eine Zuordnung zu zumindest einem der Anlagenmodule, zu zumindest einer der Einflussgrößen, zu einem Wert für die Änderung dieser Einflussgröße und zu einem Wert für einen Kostenaufwand aufweist.

Die Daten 12, 13, 14, 15 können statt in einem einzigen Datenspeicher 5 auch in jeweils einem eigenen Datenspeicher gespeichert sein.

In dem Fall, dass das System 1 als stand-alone Computer, insbesondere als mobiles Notebook, ausgebildet ist, werden der Datenspeicher 5 und die in dem Speicher 6 zu speichernden Programmmodule 8, 9, 10, 11 bevorzugt zuerst in Form eines computerlesbaren Mediums wie z.B. einer CD-ROM oder DVD bereitgestellt und dann die Programmmodule 8, 9, 10, 11 in den Speicher 6 geladen.

In dem Fall, dass das System 1 als Netzwerklösung ausgebildet ist, stellt ein mit dem Netzwerk verbundener Server die Funktion der Berechnungs- und Steuerungseinheit 2 zur Verfügung, der Datenspeicher 5 ist in dem Server oder in einem anderen Computer angeordnet, auf den der Server Zugriff hat, und die Eingabeeinheit 3 und die Ausgabeeinheit 4 sind durch Ein- und Ausgabemittel eines mit dem Netzwerk verbunden Computerterminals realisiert. Bei dem Netzwerk kann es sich hierbei auch um das Internet handeln.

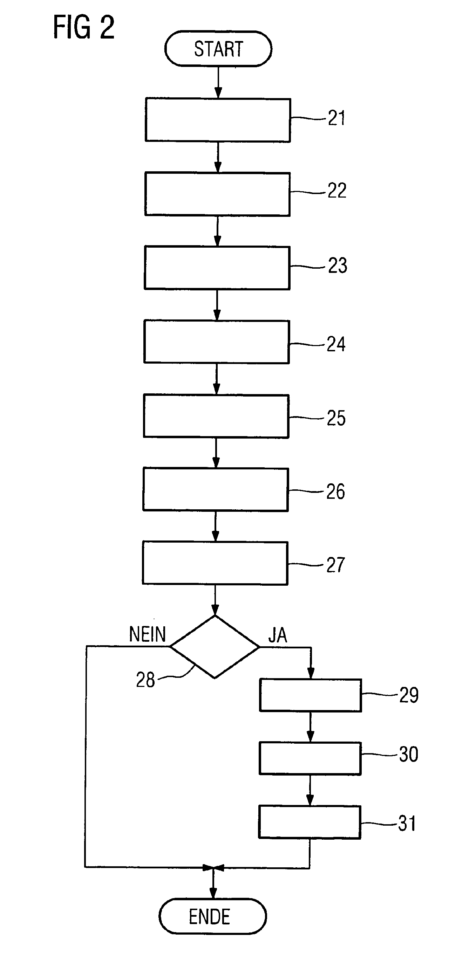

FIG 2 zeigt ein Flussdiagramm für einen erfindungsgemäßen Verfahrensablauf auf dem System von FIG1, wobei davon ausgegangen wird, dass ein stand-alone-Computer benutzt wird. Zum Start wird das System 1 aktiviert, und das Programmmodul 8 zur Steuerung des Verfahrensablaufes gestartet. In einem Schritt 21 wird der Benutzer mittels einer auf der Ausgabeeinheit 4 angezeigten Auswahlliste zur Angabe eines Anlagentyps aufgefordert wird. Beispiele für in der Auswahlliste aufgeführte Anlagentypen können sein: Papierfabrik, Beiz-Tandem-Straße, Gepäckförderanlage, Sortieranlage, Zementanlage, Zuckeranlage, Kraftwerk. Durch Auswahl eines der Anlagentypen über die Eingabeeinheit 3 ordnet ein Benutzer eine zu optimierende bzw. zu modernisierende Anlage einem der Anlagentypen zu.

Nach Auswahl des Anlagentyps wird im Schritt 22 der Datenspeicher 5 nach Anlagenmodulen 13 durchsucht, die dem ausgewählten Anlagentyp zugeordnet sind, diese Anlagenmodule in Form einer Auswahlliste auf der Ausgabeeinheit 4 zur Anzeige gebracht und der Benutzer aufgefordert, die tatsächlich in seiner Anlage verbauten Anlagenmodule zu identifizieren und auszuwählen. Beispiele für Anlagenmodule im Fall einer Beiz-Tandemstrass sind im Bereich Tandemstrasse/Walzgerüst: Hauptantrieb, Keilsystem, Hydrauliksystem, Emulsionssprühsystem und im Bereich Beizanlage/Prozesssektion: Turbulenz-Beizbehälter, Heizkreislauf, Sumpfgrube, Bandtrocknung.

Im Schritt 23 wählt der Benutzer über die Eingabeeinheit 3 diejenigen der Anlagenmodule aus, die tatsächlich in seiner Anlage verbaut sind, wodurch die Konfiguration der bestehenden Anlage definiert wird.

Im Schritt 24 wird nun der Datenspeicher nach Einflussgrößen durchsucht, die den im Schritt 23 ermittelten Anlagenmodulen zugeordnet sind.

Im Schritt 25 wird der Datenspeicher nach denjenigen der Optimierungslösungen oder Kombinationen von Optimierungslösungen durchsucht, die einem ermittelten Anlagenmodul oder einer ermittelten Aggregation von Anlagenmodulen zugeordnet sind, und eine Anzahl möglicher modifizierter Anlagenkonfigurationen ermittelt, indem eine oder mehrere der ermittelten Anlagenmodule durch jeweils eine oder mehrere der diesen zugeordneten Optimierungslösungen ersetzt werden.

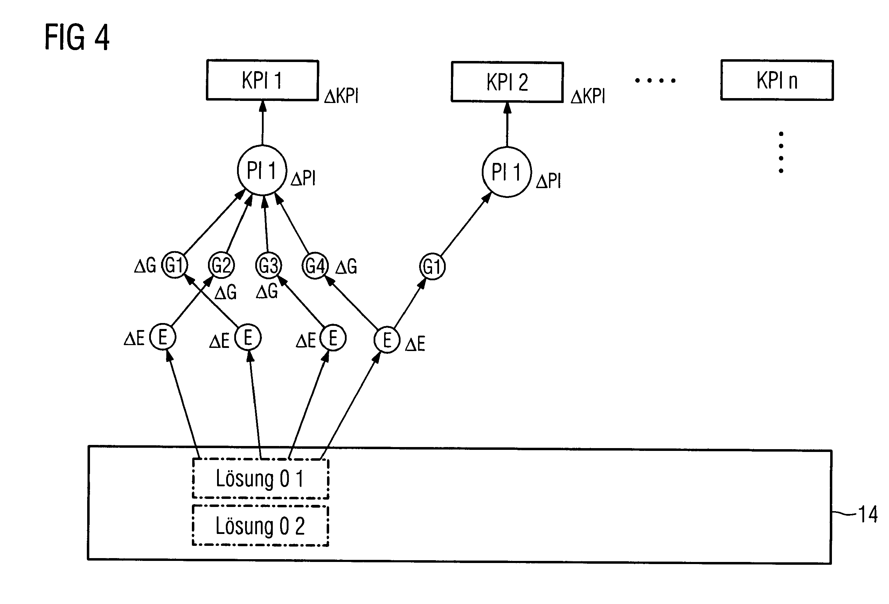

Anschließend wird in einem Schritt 26 - wie im Detail im Zusammenhang mit FIG 4 erläutert - durch das Programmmodul 10 für jede der potenziell optimalen Anlagenkonfigurationen die Änderungen der Werte der ermittelten Einflussgrößen und die damit verbundenen Änderungen der Werte der Leistungskenngrößen im Vergleich zur bestehenden Anlagenkonfiguration berechnet.

Durch Vergleich der berechneten Änderungen der Werte der ermittelten Einflussgrößen und der damit verbundenen Änderungen der Werte der Leistungskenngrößen für die verschiedenen modifizierten Anlagenkonfigurationen bzw. Optimierungslösungen wird im Schritt 27 diejenige der potenziell optimalen Anlagenkonfigurationen oder Optimierungslösungen ermittelt und auf der Ausgabeeinheit 4 zur Ausgabe gebracht, für die über die Änderungen der Werte der ermittelten technischen Einflussgrößen und der damit verbundenen Änderungen der Werte der Leistungskenngrößen der Zustand und die Leistungsfähigkeit der Anlage maximal verbesserbar ist.

Es kann somit innerhalb kurzer Zeit und mit relativ wenig Aufwand direkt bei einem Anlagenbetreiber "vor Ort" eine aus technischer und in einem gewissen Rahmen auch aus betriebswirtschaftlicher Sicht optimale Optimierungslösung ermittelt werden.

Wenn gewünscht kann im Rahmen einer weiteren Analyse in weiteren Schritten durch eine Investitionsrechnung noch die Rentabilität der ermittelten, möglichen Optimierungsmaßnahmen ermittelt werden und die Anlagenkonfiguration bzw. Optimierungslösung oder Kombination von Optimierungslösungen mit der größten Rentabilität ermittelt werden. In einem Schritt 28 wird deshalb abgefragt, ob eine weitere Investitionsrechung erfolgen soll.

Ist eine weitere Investitionsrechnung nicht gewünscht, so wird das Verfahren beendet. Wird eine Investitionsrechung dagegen gewünscht, so wird in einem Schritt 29 für jede der ermittelten modifizierten Anlagenkonfigurationen bzw. zugehörigen Optimierungslösungen der Datenspeicher 5 nach dem jeweils zugeordneten Wert für den finanziellen Aufwand für die Optimierungslösung durchsucht und der finanzielle Aufwand ermittelt. Im Fall einer Kombination mehrere Optimierungslösungen wird der Kostenaufwand beispielsweise durch Summierung der Werte für den finanziellen Aufwand der in der Kombination enthaltenen einzelnen Optimierungslösungen ermittelt.

Anschließend werden in einem Schritt 30 für jede der ermittelten, möglichen Optimierungslösungen die jeweiligen ermittelten Änderungen der Werte der Einflussgrößen und der ermittelte Kostenaufwand an das Programmmodul 11 zur Investitionsrechnung übergeben, welches in einem ersten Schritt für jede der ermittelten, möglichen Optimierungslösungen anhand der jeweiligen Änderung der Einflussgrößen die Änderung der Werthaltigkeit der Anlage und durch Vergleich mit dem jeweils zugeordneten finanziellen Aufwand die Rentabilität der Optimierungsmaßnahme berechnet. Details hierzu sind in der noch unveröffentlichten deutschen Patentanmeldung mit dem Aktenzeichen 10 2005 055 431.8 beschrieben.

In einem Schritt 31 wird durch Vergleich der berechneten Rentabilitäten diejenige der möglichen modifizierten Anlagenkonfigurationen und die zugehörigen Optimierungslösungen ermittelt und auf der Ausgabeeinheit 4 ausgegeben, für die die Rentabilität maximal ist.

Wenn die für die Ermittlung der Rentabilitäten benötigten Kosten- und Ertragsgrößen der Anlage bereits vorliegen, kann die Durchführung der Schritte 29 bis 31 durch einen Aufruf des Programm-Moduls 11 zur Investitionsrechnung durch das Steuerungsprogrammmodul 8 automatisch und unmittelbar im Anschluss an die Ermittlung der Änderungen der Einflussgrößen erfolgen.

Im Normalfall werden die Kosten- und Ertragsgrößen jedoch noch nicht vorliegen, sondern müssen erst ermittelt werden, so dass die Durchführung der Schritte 29 bis 31 in einem zeitlichen Abstand von einigen Tagen oder Wochen von der Durchführung der Schritte 21 bis 27 erfolgt.

Eine Möglichkeit zur Bestimmung der Leistungskenngrößen, der Einflussgrößen und der Anlagenmodule soll nun in Zusammenhang mit FIG 3 erläutert werden. Zuerst werden für eine Branche (z.B. Zellstoff- und Papierbranche) übliche Leistungskenngrößen (Key Performance Indicator "KPI") KPI 1, KPI 2,..., KPI n ermittelt. Beispiele für derartige KPIs sind: Overall Equipment Effectiveness (OEE), Qualitätsrate, Produktivität, Durchsatz, Kosten.

In einem zweiten Schritte werden für jede der Leistungskenngrößen KPI 1, KPI 2,..., KPI n unterlagerte Leistungsgrößen (Performance Indicator "PI") PI 1, PI 2, ... ,PI n ermittelt, die den Wert der Leistungskenngrößen mitbestimmen. Im Fall der Leistungskenngröße "Overall Equipment Effectiveness (OEE)" sind typische Leistungsgrößen die Anzahl der Bahnabrisse und die Anzahl der Sortenwechsel, für die Leistungskenngröße "Kosten" ist eine typische Leistungsgröße der Verbrauch an elektrischer Energie und für eine Leistungskenngröße "Qualität" ist eine typische Leistungsgröße die Anzahl und Größe der Profildefekte. Jeder der Leistungsgrößen ist ein Wert für deren Einfluss auf die jeweilige Leistungskenngröße zugeordnet.

Danach wird pro Anlagentyp (z.B. Papierfabrik) aus der Gesamtfunktionalität der Anlage eine technologische Anlagenstruktur ermittelt, die heruntergebrochen wird in eine Vielzahl theoretisch in der Anlage verbaubarer Anlagenmodule A1, A2, A3, ... An die die kleinsten funktionalen Einheiten der Anlage darstellen. Anschließend werden Einflussgrößen E, E' für die Leistungsgrößen PI 1, PI 2, ... PI n gesucht und diesen zugeordnet. Ein wesentliches Augenmerk gilt hierbei denjenigen Einflussgrößen, die Einfluss auf mehrere Leistungsgrößen bzw. Leistungskenngrößen haben; diese werden entsprechend auch diesen mehreren Leistungsgrößen bzw. Leistungskenngrößen zugeordnet. Somit können Wirkungszusammenhänge zwischen unterschiedlichen Einflussgrößen und unterschiedlichen Leistungsgrößen bzw. Leistungskenngrößen berücksichtigt werden.

Der Größe des Einflusses einer Einflussgröße auf den Wert einer Leistungsgröße PI bzw. Leistungskenngröße KPI kann durch eine Bewertung und Gewichtung der Einflussgröße mit Bezug auf den entsprechenden PI bzw. KPI Rechnung getragen werden, die sich in einem der Einflussgröße zugeordneten Wert für die Änderung der Leistungsgröße bzw. Leistungskenngröße bei einer Änderung der Einflussgröße äußert.

Bei einer Vielzahl von Einflussgrößen E, E' ist es zweckmäßig, diese zu Gruppen G1, G2, G3, ... Gn zusammenzufassen, und der Größe des Einflusses der Gruppe auf den Wert der Leistungsgröße durch eine Bewertung und Gewichtung der Gruppe mit Bezug auf die entsprechende Leistungsgröße bzw. Leistungskenngröße Rechnung zu tragen, wobei der Größe des Einflusses einer Einflussgröße innerhalb der Gruppe ebenfalls durch eine entsprechende Bewertung und Gewichtung der Einflussgrößen innerhalb einer Gruppe Rechnung getragen werden kann. Bei den Einflussgrößen kann es sich neben technischen Einflussgrößen E auch um betriebswirtschaftliche Einflussgrößen E' handeln.

Anschließend werden alle Anlagenmodule auf einen Einfluss auf eine der technischen oder betriebswirtschaftlichen Einflussgrößen E, E' untersucht. Falls ein Einfluss besteht, werden sie diesem Anlagenmodul zugeordnet.

Ausgangspunkt für die Ermittlung der optimalen Modernisierungslösung ist somit die Untersuchung der Leistungskenngrößen und Leistungsgrößen des entsprechenden Anlagentyps. Mit Hilfe der zu ermittelnden Einflussfaktoren der Leistungskenngrößen (und Leistungsgrößen) sowie ihrer Spiegelung an der Anlagenstruktur ergeben sich Querbezüge der Einflussfaktoren und der mit ihnen verbundenen Modernisierungslösungen auf die der Leistungskenngrößen (und Leistungsgrößen). Das unterstützt die Suche nach der optimalen Lösung und macht sie transparenter in Bezug auf ihre Auswirkungen bzw. ihren Nutzen.

Wie im Zusammenhang mit FIG 2 erläutert, werden in dem Verfahrensschritt 22 nun für eine konkrete bestehende und zu optimierende Anlage diejenigen der Anlagenmodule ermittelt, die in dieser Anlage verbaut sind und somit die Konfiguration der bestehenden Anlage ermittelt. Anhand der Zuordnungen zu den Einflussgrößen können dann im Schritt 24 diejenigen der Einflussgrößen E ermittelt werden, die den identifizierten Anlagenmodulen zugeordnet sind.

Wie in FIG 4 dargestellt, werden nun aus dem Datenspeicher 5 diejenigen der Optimierungslösungen 01, 02 oder Kombination von Optimierungslösungen und somit modifizierten Anlagenkonfigurationen ermittelt, die einem ermittelten Anlagenmodul oder einer Kombination von Anlagenmodulen zugeordnet sind. Für jede der ermittelten modifizierten Anlagenkonfigurationen bzw. zugehörigen Optimierungslösungen 01, 02 oder Kombination von Optimierungslösungen werden nun die Änderungen ΔE der Werte der ermittelten Einflussgrößen E ermittelt, und über die dadurch verbundene Änderungen ΔG der Werte der Gruppen G1, G2, ...G4 und der Änderungen ΔPI der Werte der Leistungsgrößen PI die Änderungen ΔKPI der Werte der Leistungskenngrößen KPI ermittelt.

## Patentansprüche

1. Verfahren zur Ermittlung einer optimalen Anlagenkonfiguration, bei dem in einem Datenspeicher (5) gespeichert werden
a) Daten bezüglich Leistungskenngrößen (KPI), die den Zustand und die Leistungsfähigkeit einer Vielzahl von Anlagen eines Anlagentyps bestimmen, sowie technischer Einflussgrößen (E), die den Wert der Leistungskenngrößen (KPI) bestimmen,
b) Daten (14) bezüglich einer Anzahl theoretisch in einer Anlage des Anlagentyps verbaubarer technischer Anlagenmodule (A1...An), wobei mit Hilfe der Anlagenmodule die gesamte technologische Struktur einer Anlage des Anlagentyps abbildbar ist und wobei jedes der Anlagenmodule zumindest einer der technischen Einflussgrößen zugeordnet ist,
c) Daten (15) bezüglich einer Anzahl möglicher technischer Optimierungslösungen (01, 02), wobei jede der Optimierungslösungen eine Zuordnung zu zumindest einem der Anlagenmodule, zu zumindest einer der Einflussgrößen sowie zu einem Wert für eine Änderung dieser Einflussgröße aufweist,
und bei dem
d) Daten bezüglich der tatsächlich in einer bestehenden Anlage verbauten Anlagenmodule (A1, A2) empfangen werden und daraus die Konfiguration einer bestehenden Anlage ermittelt wird,
e) diejenigen der Einflussgrößen (E) in dem Datenspeicher (5) ermittelt werden, die den ermittelten Anlagenmodulen (A1, A2) zugeordnet sind,
f) eine Anzahl möglicher modifizierter Anlagenkonfigurationen ermittelt wird, indem jeweils eines oder mehrere der ermittelten Anlagenmodule durch jeweils eine oder mehrere der diesen zugeordneten Optimierungslösungen (01, 02) ersetzt wird,
g) für jede der möglichen modifizierten Anlagenkonfigurationen die Änderungen der Werte der ermittelten Einflussgrößen (E) und die damit verbundene Änderungen der Werte der Leistungskenngrößen (KPI) im Vergleich zur bestehenden Anlagenkonfiguration berechnet werden und daraus eine optimale Anlagenkonfiguration abgeleitet wird.

2. Verfahren nach Anspruch 1, bei dem diejenige der modifizierten Anlagenkonfigurationen ausgegeben wird, für die über die Änderung des Wertes der identifizierten technischen Einflussgrößen (E) und der damit verbundenen Änderungen der Werte der Leistungskenngrößen (KPI) der Zustand und die Leistungsfähigkeit der Anlage maximal verbesserbar ist.

3. Verfahren nach Anspruch 1 oder 2, bei dem bei der Ermittlung der optimalen Anlagenkonfiguration zusätzlich betriebswirtschaftliche Einflussgrößen (E'), die den Wert der Leistungskenngrößen (KPI) bestimmen, berücksichtigt werden.

4. Verfahren nach einem der vorhergehenden Ansprüche, bei dem aus der Änderung der Werte der ermittelten technischen Einflussgrößen (E) und der damit verbundenen Änderungen der Werte der Leistungskenngrößen (KPI) eine Änderung der Werthaltigkeit der Anlage ermittelt wird.

5. Verfahren nach einem der vorhergehenden Ansprüche, bei dem jeder der Optimierungslösungen (01, 02) ein Kostenaufwand zugeordnet ist, und bei dem für die ermittelten modifizierten Anlagenkonfigurationen durch Vergleich der Änderung der Werthaltigkeit der Anlage und des Kostenaufwandes eine Rentabilität der Optimierung ermittelt wird

6. Verfahren nach einem der vorhergehenden Ansprüche, bei dem jeweils eine Anzahl von Einflussgrößen (E) zu einer Gruppe (G) zusammengefasst wird.

7. Verfahren nach einem der vorhergehenden Ansprüche, bei dem in dem Datenspeicher (5) für jede der Leistungskenngrößen (KPI) noch Daten über eine Anzahl unterlagerter Leistungsgrößen (PI) gespeichert sind, wobei eine Leistungsgröße (PI) immer nur genau einer einzigen Leistungskenngrößen (KPI) zugeordnet ist.

8. System (1) zur Ermittlung einer optimalen Anlagenkonfiguration, umfassend
a) einen Datenspeicher (5), in dem gespeichert sind
- Daten bezüglich Leistungskenngrößen (KPI), die den Zustand und die Leistungsfähigkeit einer Vielzahl von Anlagen eines Anlagentyps bestimmen,
- Daten bezüglich technischer Einflussgrößen (E), die den Wert der Leistungskenngrößen (KPI) bestimmen,
- Daten (14) bezüglich einer Anzahl theoretisch in einer Anlage des Anlagentyps verbaubarer technischer Anlagenmodule (A1, A2), wobei mit Hilfe der Anlagenmodule die gesamte technologische Struktur einer Anlage des Anlagentyps abbildbar ist, und wobei jedes der Anlagenmodule zumindest einer der technischen Einflussgrößen zugeordnet ist,
- Daten bezüglich eine Anzahl möglicher technischer Optimierungslösungen (01, 02), wobei jede der Optimierungslösungen eine Zuordnung zu zumindest einer der Anlagenmodulen, zu zumindest einer der Einflussgrößen sowie zu einem Wert für eine Änderung dieser Einflussgröße aufweist,
b) eine Eingabeeinheit (3) zur Eingabe von Daten bezüglich der in der Anlage verbauten Anlagenmodule
c) eine Ausgabeeinheit (4),
d) eine Berechungs- und Steuereinheit (2), die
- die Daten (14) bezüglich der Anzahl theoretisch in einer Anlage des Anlagentyps verbaubarer technischer Anlagenmodulen (A1...n) auf der Ausgabeeinheit (4) zur Ausgabe bringt,
- Daten bezüglich der in der Anlage verbauten Anlagenmodulen von der Eingabeeinheit (3) empfängt,
- dem Datenspeicher (5) diejenigen Einflussgrößen (E) entnimmt, die den in der Anlage verbauten Anlagenmodulen zugeordnet sind,
- eine Anzahl möglicher modifizierter Anlagenkonfigurationen ermittelt, indem sie eines oder mehrere der ermittelten Anlagenmodule (A1, A2) durch jeweils eine oder mehrere der diesen zugeordneten Optimierungslösungen (01, 02) ersetzt,
- für jede der möglichen modifizierten Anlagenkonfigurationen die Änderungen der Werte der ermittelten Einflussgrößen (E) und die damit verbundenen Änderungen der Werte der Leistungskenngrößen (KPI) im Vergleich zur bestehenden Anlagenkonfiguration berechnet.

9. System (1) nach Anspruch 8, bei dem die Berechungs- und Steuereinheit (2) diejenige der möglichen modifizierten Anlagenkonfigurationen ermittelt und auf der Ausgabeeinheit (4) zur Ausgabe bringt, für die über die Änderung des Wertes der identifizierten technischen Einflussgrößen (E) und der damit verbundenen Änderungen der Werte der Leistungskenngrößen (KPI) der Zustand und die Leistungsfähigkeit der Anlage maximal verbesserbar ist.

10. Computerprogramm-Produkt, welches auf einem computerlesbaren Medium speicherbar ist und einen Software-Code-Abschnitt aufweist, welcher geeignet ist, ein Computersystem zur Durchführung des Verfahrens gemäß einem der Ansprüche 1 bis 7 zu veranlassen, wenn das Produkt auf dem Computersystem ausgeführt wird.

11. Computerlesbares Medium, auf dem das Computerprogramm-Produkt nach Anspruch 10 gespeichert ist.
